(19) Europäisches Patentamt
European Patent Office
Office européen des brevets

(11) Publication number: **0 239 274 A1**

# (12) EUROPEAN PATENT APPLICATION

(21) Application number: 87301977.2

(22) Date of filing: 06.03.87

(51) Int. Cl.⁴: C 07 F 9/40, A 01 N 57/20, C 07 F 9/48

(30) Priority: 10.03.86 JP 52303/86
30.09.86 JP 233713/86
07.11.86 JP 266457/86

(43) Date of publication of application: 30.09.87 Bulletin 87/40

(84) Designated Contracting States: BE CH DE ES FR GB IT LI NL

(71) Applicant: SUMITOMO CHEMICAL COMPANY, LIMITED, 15 Kitahama 5-chome Higashi-ku, Osaka-shi Osaka 541 (JP)

(72) Inventor: Kondo, Michitada, 2-27-405, Okamoto-1-chome, Higashinada-ku Kobe (JP)
Inventor: Yamamoto, Haruyasu, 790-5, Kuchiri, Onouecho Kakogawa-shi (JP)
Inventor: Sasaki, Mitsuru, 10-5-305, Sonehigashinocho-2-chome, Toyonaka-shi (JP)

(74) Representative: Goldin, Douglas Michael et al, J.A. KEMP & CO. 14, South Square Gray's Inn, London WC1R 5EU (GB)

## (54) A trithiophosphonic acid ester as an insecticide and nematocide.

(57) A trithiophosphonic acid ester, of formula:

$$(tert\text{-}C_4H_9S)_2\overset{\overset{\displaystyle S}{\|}}{P}\text{-}R$$

wherein R is a methyl or ethyl group is a useful insecticide or nematocide. The new compounds are prepared by conversion of the corresponding alkyl S,S-di-tert-butyl phosphonite.

EP 0 239 274 A1

ACTORUM AG

# A TRITHIOPHOSPHONIC ACID ESTER AS AN INSECTICIDE AND NEMATOCIDE

The present invention relates to S,S-di-tert-butyl alkylphosphonotrithioate (hereinafter referred to as present compound), represented by formula (I) shown below, its preparation and use.

$$(\text{tert-}C_4H_9S)_2\overset{\displaystyle S}{\overset{\|}{P}}R \qquad (I)$$

, wherein R is a methyl group or ethyl group.

As organophosphorous insecticidal or nematocidal compounds, there are known terbufos, phosphate compounds described in Japanese Unexamined Patent Application Nos. 89490/1985, 58994/1985, Japanese Patent Publication No. 29847/1985, etc., a compound described in Toxicol Appl. Phermacol., 11 (1), 49-67 (1967) and phosphonate compounds described in Zh. Obshch. Khim., 88 (3), 609-618 (1968), etc.

However, it may not always be said that these compounds possess sufficient efficacy as soil insecticides and nematocides.

The present inventors conducted various studies to develop a new compound and found that the present compound has very excellent insecticidal and nematocidal activities to Lepidoptera such as rice stem borer (*Chilo suppressalis* Walker) and tobacco cutworm

(*Prodenia litura* Fabricius), Diptera such as house fly (*Musca domestica vicina* Macquart) and common mosquito (*Culex pipiens pallens* Coquilett), Diabrotica such as southern corn rootworm (*Diabrotica undecimpunctaca howardi* Barber), northern corn rootworm (*Diabrotica longicornis* Say), and western corn rootworm (*Diabrotica virgifera* Le Conte) and nematodes such as southern root-knot nematode (*Meloidogyne incognita* Kofoid et White), particularly to soil pests and nematoda which live in soil and eat various kinds of crops, flowers, lawn grasses, etc., thereby offering significantly higher efficacy than conventional compounds.

Therefore, the present invention offers S,S-di-tert-butyl alkylphosphonotrithioate represented by the formula (I) shown below, its preparation and method of use of insecticides and nemotocides containing it as an active ingredient.

$$(\text{tert-}C_4H_9S)_2\overset{\overset{S}{\|}}{P}R \qquad (I)$$

, wherein R is a methyl group or ethyl group.

Below follows a detailed explanation of the preparation method. The present compound represented by the formula (I) can be prepared by the following method:

1) The present compound represented by the general formula (I) can be prepared by reacting

S,S-di-tert-butyl alkylphosphonite which is represented by the formula (II) shown below, with a sulfurizing agent.

$$(tert\text{-}C_4H_9S)_2PR \qquad (II)$$

, wherein R is a methyl group or ethyl group.

A typical example of the above preparation is as follows:

One equivalent of S,S-di-tert-butyl alkylphosphonite (II) is treated with one to two equivalents of the sulfurizing agent in a solvent at the temperature of 30°C to 150°C for one to twenty-four hours.

Thiophosphoryl trichloride, sulfur, etc. can be used as the sulfurizing agent.

Aromatic hydrocarbons such as benzene, toluene and xylene, halogenated aromatic hydrocarbons such as chlorobenzene, and the like can be used as a solvent. After completion of the reaction and usual work-up, if necessary, purification of the product can be done by chromatography, distillation,etc.

2) The present compound represented by the formula (I) can be also prepared by reacting S,S-di-tert-butyl alkylphosphonodithioate, which is represented by the formula (III) shown below, with 2,4-bis-(4-methoxyphenyl)-1,3-dithia-2,4-diphosphetane-2,4-disulfide as a sulfurizing agent.

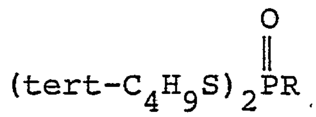

(III)

, wherein R is a methyl group or ethyl group.

A typical example of the above preparation is as follows:

One equivalent of S,S-di-tert-butyl alkylphosphonodithioate (III) is treated with one half to one equivalent of the sulfurizing agent in a solvent at the temperature of 30°C to 150°C for one to twenty-four hours.

Aromatic hydrocarbons such as benzene, toluene, and xylene, halogenated aromatic hydrocarbons such as chlorobenzene and the like can be used as a solvent. After completion of the rèaction and usual work-up, if necessary, purification of the product can be done by chromatography, distillation, etc.

3) The present compound represented by the formula (I) can be prepared also by reacting alkylthiophosphonyldichloride represented by the formula (IV):

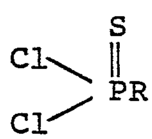

(IV)

wherein R is a methyl or ethyl group, with tert-butylmercaptan, in the presence of alkaline water together with quaternary ammonium salt catalyst, or copper catalyst, or both.

A typical example of the above preparation is as follows:

One equivalent of alkylthiophosphonyldichloride (IV) and two equivalents or more of tert-butylmercaptan are dissolved in a solvent, and thereto added is quaternary ammonium salt catalyst, or copper catalyst or both, followed by addition of 2 equivalents or more of alkaline aqueous solution. Reaction temperature is between -20°C and 50°C and reaction time is 4 to 24 hours. The alkaline water used is 20 to 50%, preferably 40 to 50%, aqueous solution of caustic soda or caustic potash or the like.

Tetra-n-butylammonium bromide, triethylbenzylammonium chloride and the like can be used as a quaternary ammonium salt catalyst. Copper, cuprous chloride and the like can be used as a copper catalyst.

Aromatic hydrocarbons such as benzene, toluene, etc., and the like can be used as a solvent. After completion of the reaction, the resulting product is subjected to usual work-up and can be purified by chromatography, distillation, etc., if necessary.

S,S-di-tert-butyl alkylphosphonite represented by the formula (II), which is an intermediate of the present compound, can be prepared by reacting one equivalent of alkyldichlorophosphine represented by the formula (V):

$$RPCl_2 \qquad (V)$$

wherein R is a methyl or ethyl group, with 2 to 2.5

equivalents of tert-butylmercaptan, in a solvent containing 2 to 2.5 equivalents of organic base, at the temperature of -20 to 50°C for 1 to 10 hours. Aromatic hydrocarbons such as benzene, toluene, and xylene, and halogenated aromatic hydrocarbons such as chlorobenzene can be used as a solvent. Pyridine, triethylamine, tributylamine, etc. can be used as an organic base. After completion of the reaction, the resultant solution is filtered and concentrated, if necessary, followed by purification by means of distillation, etc.

S,S-di-tert-butyl alkylphosphonodithioate represented by the formula (III), which is an intermediate of the present compound, can be prepared by reacting one equivalent of S,S-di-tert-butyl alkylphosphonite represented by the formula (II) with 1 to 2 equivalents of oxydizing agent in a solvent, at the temperature of 0 to 50°C for 1 to 24 hours. Hydrogen peroxide, metachloroperbenzoic acid, tert-butylhydroperoxide and the like can be used as an oxydizing agent. Aromatic hydrocarbons such as benzene, toluene, and xylene, and halogenated aromatic hydrocarbons such as chlorobenzene can be used as a solvent. After completion of the reaction, resulting product is subjected to usual work-up and if necessary, can be purified by chromatography, distillation, etc.

The present compound can be used as an active ingredient of insecticides or nematocides without adding any other ingredients. However, the compound can be formulated into granules, dusts, wettable powders,

emulsifiable concentrates, oil sprays, aerosols, heating fumigant such as mosquito coil and mat, fogging fumigant, non-heating fumigant, poisonous bait and the like by being mixed with carriers, whether solid, liquid or gaseous, as well as surfactant, other auxiliary substances for formulation, baits, etc. or by being impregnanted into base materials of coils and mats, etc. These formulations contain 0.01 to 95% by weight of the present compound as an active ingredient.

For the solid carrier of the formulation can be used fine powders, granules, or the like of clays (e.g. kaolin clay, attapulgite clay, diatomaceous earth, synthetic hydrated silicon dioxide, Fubasami clay, bentonite, terra abla), talcs, other inorganic minerals (e.g. sericite, quartz powder, sulfur powder, activated carbon, calcium carbonate, hydrated silica), chemical fertilizers (e.g. ammonium sulfate, ammonium phosphate, ammonium nitrate, urea, ammonium chloride) and the like. For the liquid carrier can be used alcohols (e.g. methanol, ethanol), ketones (e.g. acetone, methyl ethyl ketone), aromatic hydrocarbons (e.g. benzene, toluene, xylene, ethylbenzene, methylnaphthalene), aliphatic hydrocarbons (e.g. n-hexane, cyclohexane, kerosene, petroleum ether), esters (e.g. ethyl acetate, butyl acetate), nitriles (e.g. acetonitrile, isobutyronitrile), ether (e.g. dioxane, diisopropyl ether), acid amides (e.g. dimethylformamide, dimethylacetamide), halogenated hydrocarbons (e.g. dichloroethane, trichloroethylene, carbon tetrachloride) and the like.

For the gaseous carrier can be used freon gas, butane gas, carbon dioxide gas and the like.

For the surfactant can be used alkyl sulfates, alkylsulfonates, alkylarylsulfonates, alkylaryl ethers and their polyoxyethylenized products, polyethylene glycol ethers, polyhydric alcohol esters, sugar alcohol derivatives and the like.

For the sticking agent and the dispersing agent can be used casein, gelatin, polysaccharides (e.g., starch powder, gum arabic, cellulose derivatives, alginic acid), lignin derivatives, bentonites, saccharides, synthetic water-soluble high polymers (e.g., polyvinyl alcohol, polyvinyl pyrrolidone, polyacrylic acids) and the like. For the stabilizer can be used PAP (isopropyl acid phosphate), BHT (2,6-di-tert-butyl-4-methylphenol), BHA (mixture of 2-tert-butyl-4-methoxyphenol and 3-tert-butyl-4-methoxyphenol), vegetable oils, mineral oils, surfactants, fatty acids and their esters, and the like.

The formulations obtained may be used, as they are or after dilution with water or in mixture with other insecticides, acaricides, nematocides, fungicides, herbicides, plant growth regulators, fertilizers or soil improvers, etc.

When the present compound is used as an active ingredient for insecticides or nematocides, its dosage is usually 100 to 10,000 g a.i./ha, and the concentration is 10 to 1,000 ppm if to be diluted with water in the form of emulsifiable concentrate, wettable powder or the like.

These dosage and concentration vary with the kind of formulation, application time, application place, application method, species of pests, degree of damage and the like, and may be increased or decreased irrespective of the range of figures given above.

Examples of preparation, formulation, and tests are shown below to describe the present invention in detail, but the present invention is in no way limited to such examples.

Preparation Example 1 [Compound (1)]

To a stirred solution of 4.67 g (0.04 mol) of methyldichlorophosphine and 7.22 g (0.08 mol) of tert-butylmercaptan was added dropwise 8.1 g (0.08 mol) of triethylamine at 0 - 5°C. The reaction was continued at room temperature for 1.5 hrs. The reaction mixture was then filtered. To the filtrate, 7.45 g (0.044 mol) of thiophosphoryl trichloride was added. The mixture was refluxed for 7 hrs. while stirring, cooled, washed with water (100 ml x 2), dried over anhydrous magnesium sulfate and filtered. The filtrate was concentrated in vacuo and the residue was chromatographed over a silica gel to give 7.18 g (70%) of S,S-di-tert-butyl methylphosphonotrithioate; $n_D^{22.3}$ 1.5617.

Preparation Example 2 [Compound (2)]

To a solution of 5.09 g (0.02 mol) of S,S-di-tert-butyl ethylphosphonodithioate in 100 ml of toluene

was added 4.04 g (0.01 mol) of 2,4-bis(4-methoxyphenyl)-1,3-dithia-2,4-diphosphethane-2,4-disulfide. The mixture was refluxed for 8 hrs. while stirring, cooled, washed with water (100 ml x 2), dried over anhydrous magnesium sulfate and filtered. The filtrate was concentrated in vacuo and the residue was chromatographed over a silica gel to give 4.87 g (90%) of S,S-di-tert-butyl ethylphosphonotrithioate; $n_D^{22.2}$ 1.5535.

Preparation Example 3 [Compound (1)]

A mixture of 4.14 g (0.0275 mol) of methylphosphonothioic dichloride, 5.00 g (0.0555 mol) of tert-butylmercaptan, 0.5 g (0.0016 mol) of tetra-n-butylammonium bromide and 0.5 g (0.005 mol) of cuprous chloride in 20 ml of toluene was kept at 20 - 25°C. To the mixture was added dropwise 6.10 g (0.0555 mol as NaOH) of 40% caustic soda solution for a period of 1 hr. The resulting mixture was then kept at 40 - 50°C for 5 hrs. After same work-up as described above, 6.13 g (87.1%) of S,S-di-tert-butyl methylphosphonotrithioate was obtained.

Preparation Example 4 [Compound (2)]

To a stirred solution of 4.53 g (0.0275 mol) of ethylphosphonothioic dichloride, 5.00 g (0.0555 mol) of tert-butylmercaptan and 0.5 g (0.0016 mol) of tetra-n-butylammonium bromide in 20 ml of toluene was added dropwise 6.10 g (0.0555 mol as NaOH) of 40% caustic soda solution at 10 - 15°C for a period of 30 min. and the

mixture was kept at 20 - 25°C for 1 hr. After cooling to 10 - 15°C, 6.10 g (0.0555 mol as NaOH) of 40% caustic soda solution was added and the resulting mixture was allowed to stand overnight at room temperature. Same work-up as described above gave 5.73 g (76.4%) of S,S-di-tert-butyl ethylphosphonotrithioate.

Formulation examples are shown below. The present compounds are indicated by the number of compounds in the Preparation Example. All parts are expressed in terms of weight.

Formulation Example 1 Emulsifiable Concentrate

Forty parts of the present compound (1) or (2) is dissolved into 50 parts of xylene and thereto added 10 parts of emulsifier Sorpol SM-200 (Trade mark registered by Toho Chemical Co., mixture of polyoxyethylene alkylaryl ether, etc. and dodecylbenzenesulfonic acid). Then the solution is stirred well, and 40% emulsifiable concentrate of the present compound (1) or (2) is obtained.

Formulation Example 2 Wettable Powder

To 40 parts of the present compound (1) or (2), 5 parts of Sorpol SM-200 is added, and the solution is mixed well. Then 20 parts of Carplex #80 (Trade mark registered by Shionogi; fine powders of synthetic hydrated silicon dioxide) and 35 parts of 300 mesh diatomaceous earth are added, and then the mixture is

stirred with a juice mixer to obtain 40% wettable powder of the present compound (1) or (2) respectively.

Formulation Example 3 Granule

To 5 parts of the present compound (1) or (2), 5 parts of Toyolignin CT (Trade mark registered by Toyobo; lignin sulfonate) and 90 parts of GSM clay (Trade mark registered by Zieklite Mining Co., powdered quartz) are added, and the mixture is mixed sufficiently in a stirrer. Subsequently, water equivalent to 10% of the mixture is added and stirred. Then the mixture is processed to granules with granulator and the granules are air-dried to obtain 5% granules of the present compound (1) or (2) respectively.

Formulation Example 4 Dust Formulation

Five parts of the present compound (1) or (2) is dissolved into 20 parts of acetone. Then 3 parts of Carplex #80 (as mentioned above), 0.3 part of PAP, and 91.7 parts of 300 mesh talc are added thereto. The mixture is mixed by stirring and acetone is removed by evaporation to obtain 5% dust formulation.

Formulation Example 5 Oil Spray

Twenty parts of the present compound (1) or (2) is dissolved into 80 parts of kerosene to obtain 20% oil spray of each compound.

It is shown below by test examples that the

present compounds are useful as an active ingredient of insecticides and nematocides. Unless otherwise specified herein, all the tests stated below were conducted twice. Of test compounds, the present compounds are shown by Compound No. in Preparation Examples and compounds used as a control are shown by Compound symbol in Table 1.

Table 1

| Compound symbol | Chemical structure | Remark |
|---|---|---|
| (A) | S<br>‖<br>$(C_2H_5O)_2PSCH_2Stert\text{-}C_4H_9$ | terbufos |
| (B) | O<br>‖<br>$(n\text{-}C_4H_9S)_2PCH_3$ | Compound described in toxicol. Appl. Pharmacol., 11(1), 49-67(1967) |
| (C) | S<br>‖<br>$(iso\text{-}C_4H_9S)_2PC_2H_5$ | Compound described in Zh. Obshch. Khim., 88(3), 609-13(1968) |
| (D) | S<br>‖<br>$(tert\text{-}C_4H_9S)_2POCH_3$ | Compound described in Japanese patent publication (unexamined) No. 89490/ 1985 |
| (E) | S<br>‖<br>$(tert\text{-}C_4H_9S)_2POC_2H_5$ | Compound described in Japanese patent publication (unexamined) No. 89490/ 1985 |
| (F) | S<br>‖<br>$(tert\text{-}C_4H_9S)_2POCH_3$ | Compound described in Japanese patent publication (unexamined) No. 58994/ 1985 |
| (G) | O<br>‖<br>$(tert\text{-}C_4H_9S)_2POC_2H_5$ | Compound described in Japanese Patent publication (unexamined) No. 29847/ 1969 |
| (H) | O<br>‖<br>$(tert\text{-}C_4H_9S)_2PC_2H_5$ | The oxon type of the present compound (2) |

Test Example 1

Five ml of water-diluted solution of the emulsifiable concentrate prepared in accordance with the Formulation Example 1 was mixed with 50 g of soil (16 mesh) to adjust the concentration of an active ingredient in the soil to the prescribed level. The soil was put into a polyethylene cup having a diameter of 5.6 cm and height of 5.8 cm. Two seedlings of corn of which roots had grown to 2 - 3 cm were planted in the soil. At the same time, ten third instar larvae of southern corn rootworms (Diabrotica undecimpunctata howardi BARBER) were released there. After 2 days, the number of the dead and alive was counted to obtain mortality (%). The results are shown in Table 2.

Table 2

| Test compound | Mortality (%) | |
|---|---|---|
| | 0.125 ppm | 0.0625 ppm |
| (1) | 100 | 100 |
| (2) | 100 | 100 |
| (A) | 80 | 0 |
| (B) | 5 | 5 |
| (C) | 20 | 0 |
| (D) | 5 | 0 |
| (E) | 0 | 0 |
| (F) | 90 | 20 |
| (G) | 20 | 0 |
| Untreated | 0 | |

Test Example 2

The emulsifiable concentrate of the present compound formulated according to Formulation Example 1 was diluted with water 800 times (500 ppm). And 1 ml of the resulting solution was made to soak into 5 g of the bait for rice stem borers (Chilo suppressalis) which was placed in a polyethylene cup of 5.5 cm in diameter. Then, ten 10-day old larvae of rice stem borers were liberated in the cup. Eight days after liberation, the number of the dead and alive larvae was counted to obtain mortality (%). The test was conducted twice. The results are shown in Table 3.

Table 3

| Test compound | Mortality (%) |
|---|---|
| (1) | 100 |
| (2) | 100 |
| No treatment | 0 |

Test Example 3

The emulsifiable concentrate of the present compound formulated according to Formulation Example 1 was diluted with water 800 times (500 ppm). And 2 ml of the resulting solution was made to soak into 13 g of the bait for tobacco cutworms (Spodoptera litura) which was placed in a polyethylene cup of 11 cm in diameter. Then,

10 fourth instar larvae of tobacco cutworms were liberated in the cup. Six days after liberation, the number of the dead and alive larvae was counted to obtain mortality (%). The test was conducted twice. The results are shown in Table 4.

Table 4

| Test compound | Mortality (%) |
|---|---|
| (1) | 100 |
| (2) | 100 |
| No treatment | 0 |

Test Example 4

At the bottom of a polyethylene cup of 5.5 cm in diameter, a piece of filter paper of the same size was placed. The emulsifiable concentrate of the present compound formulated according to Formulation Example 1 was diluted with water 800 times (500 ppm). The resulting solution (0.7 ml) was dropped onto the filter paper and 30 mg of sucrose was placed evenly on it as bait. Then, 10 female adult houseflies (Musca domestica) of WHO strain were liberated in the cup with a lid on. Twenty-four hours after liberation, the number of the dead and alive flies was counted to obtain mortality (%). The results are shown in Table 5.

Table 5

| Test compound | Mortality (%) |
|---|---|
| (1) | 100 |
| (2) | 100 |
| No treatment | 10 |

Test Example 5

The emulsifiable concentrate of the present compound formulated according to Formulation Example 1 was diluted with water to get 3.5 ppm solution. One hundred ml of the resulting solution was put in a polyethylene cup of 180 ml, and 20 last instar larvae of common mosquito (Culex pipiens pallens) were liberated in the cup. The next day after liberation, the number of the dead and alive larvae was counted. After that, bait was added to the cup and the emergence inhibition was examined when all the insects in the untreated plot has emerged. The mortality and the emergence inhibition are classified into three levels, respectively, as shown below. The results are shown in Table 6.

Mortality A: 90% or higher

B: less than 90% to 10%

C: less than 10%

| | | |
|---|---|---|
| Emergence inhibition | A: | 90% or higher |
| | B: | less than 90% to 80% |
| | C: | less than 80% |

Table 6

| Test compound | Mortality (%) | Emergence inhibition (%) |
|---|---|---|
| (1) | A | A |
| (2) | A | A |
| No treatment | C | C |

1 Test Example 6

The soil contaminated with root-knot nematodes (<u>Meloidogyne</u> <u>sp</u>.) was placed in a polyethylene cup of 12 cm in diameter and 8 cm in height, and three tomato plants of 3 to 4 leaf stage were planted. The emulsifiable concentrate of the present compound formulated according to Formulation Example 1 was diluted with water to get 500 ppm, and 30 ml of the resulting solution was applied into the soil in the cup, one day after the planting. Eighteen days thereafter, the degree of root-knot was observed with the naked eye, and classified into the following six levels; 5, 4, 3, 2, 1, 0. The results are shown in Table 7.

| Level | Degree of root-knot |
|---|---|
| 5 | No settlement |
| 4 | Not more than 10% as compared with untreated plot |
| 3 | 10% - 30% as compared with untreated plot |
| 2 | 30% - 50% as compared with untreated plot |
| 1 | Much settlement similar to untreated plot |
| 0 | The same as or more than untreated plot |

Table 7

| Test compound | Extent of settlement |
|---|---|
| (1) | 4 |
| (2) | 3 |
| No treatment | 0 |

Test Example 7

The granule of the present compound formulated according to Formulation Example 3 was mixed with 500 g of non-sterilized soil (0.4 lb/acre of active ingredient), and then the soil was placed in a polyethylene cup of 5.6 cm in diameter and 5.8 cm in height. Two seedlings of corn having roots of 2 to 3 cm long were planted at the predetermined days after applications. At the same time, ten third instar larvae of southern corn rootworm (Diabrotica undecimpunctata howardi BABER) were liberated in the cup. Two days after liberation,

1 the number of the dead and alive larvae was counted to obtain mortality (%). The results are shown in Table 8.

Table 8

| Test compound | Mortality (%) | | |
|---|---|---|---|
| | 20 days after | 40 days after | 60 days after |
| (2) | 100 | 100 | 100 |
| (A) | 50 | 0 | 0 |
| (H) | 100 | 100 | 60 |

CLAIMS

1. A trithiophosphonic acid ester of the formula:

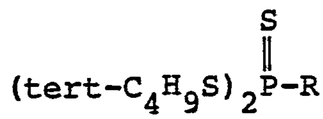

wherein R is a methyl or ethyl group.

2. The trithiophosphonic acid ester according to claim 1, wherein R is a methyl group.

3. The trithiophosphonic acid ester according to claim 1, wherein R is an ethyl group.

4. An alkyl S,S-di-tert-butyl phosphonite of the formula:

$$(tert\text{-}C_4H_9S)_2P\text{-}R$$

wherein R is a methyl or ethyl group.

5. A method for producing a trithiophosphonic acid ester of the formula:

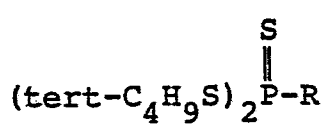

wherein R is a methyl or ethyl group, which comprises

(a) reacting an alkyl S,S-di-tert-butyl phosphonite of the formula:

$$(tert\text{-}C_4H_9S)_2P\text{-}R$$

wherein R is as defined above, with sulfurizing agent or

(b) reacting an alkyl S,S-di-tert-butyl phosphonothioate of the formula:

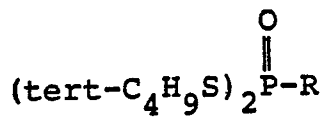

wherein R is as defined above, with 2,4-bis(4-methoxyphenyl)-1,3-dithia-2,4-diphosphethane-2,4-disulfide, or

(c) reacting a thiophosphonic dichloride of the formula:

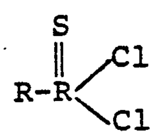

wherein R is as defined above, with tert-butylmercaptan in the presence of a base and catalyst.

6. The method according to claim 5-(a), wherein the sulfides are sulfur or thiophosphoryl trichloride.

7. The method according to claim 5-(c), wherein the base is caustic soda or caustic potash.

8. The method according to claim 5-(c) or 7, wherein the catalyst is alkyl ammonium salt, copper, cuprous chloride or their combination.

9. An insecticidal and nematocidal composition which comprises, as an active ingredient, a trithiophosphonic acid ester according to any one of claims 1 to 3, and an inert carrier.

10. A trithiophosphonic acid ester according to any one of claims 1 to 3 for use in a method for controlling insects or nematodes by applying an insecticidally or nematocidally effective amount of the trithiophosphonic acid ester to the insects or nematodes or to an environment susceptible to infestation by insects or nematodes.

0239274

European Patent Office

# EUROPEAN SEARCH REPORT

Application number

EP 87 30 1977

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 024 830 (MOBIL OIL CORP.) * Page 1, lines 9-30; pages 5-6, example 2 * | 1-3,9, 10 | C 07 F 9/40<br>A 01 N 57/20<br>C 07 F 9/48 |
| Y | CHEMICAL ABSTRACTS, vol. 65, no. 4, 15th August 1966, column 5480b, Columbus, Ohio, US; V.D. AKAMSIN et al.: "Esters of thio acids of trivalent phosphorus. I. Esters of ethylphosphonodithious, ethylphenylphosphinothious, and diethylphosphinothious acids" & IZV. AKAD. NAUK SSSR, SER. KHIM. 1966(3), 493-8 * Abstract * | 1-8 | |
| | | | TECHNICAL FIELDS SEARCHED (Int. Cl.4) |
| P,X | EP-A-0 210 608 (STAUFFER CHEMICAL CO.) * Columns 7,8, compounds 1,2; claims * | 1-3,5-10 | C 07 F 9/00 |
| P,Y | GB-A-2 171 409 (MAY & BAKER LTD.) * Page 11, example 8; page 12 * | 1-3,9, 10 | |

The present search report has been drawn up for all claims

| Place of search | Date of completion of the search | Examiner |
|---|---|---|
| THE HAGUE | 15-06-1987 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document